(19)

Europäisches
Patentamt
European
Patent Office
Office européen
des brevets

(11) **EP 2 514 512 A1**

(12) **EUROPEAN PATENT APPLICATION**

(43) Date of publication:
24.10.2012 Bulletin 2012/43

(51) Int Cl.:
**B01D 53/92** [(2006.01)]  **B01D 53/78** [(2006.01)]
**B01D 53/48** [(2006.01)]  **B01D 53/56** [(2006.01)]
**B01D 53/60** [(2006.01)]  **B01D 53/04** [(2006.01)]

(21) Application number: **12165046.9**

(22) Date of filing: **20.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.04.2011 JP 2011095832**

(71) Applicant: **Fukushima Ltd.**
**Fukushima 960-8054 (JP)**

(72) Inventors:
• **Tanaka, Nobusuke**
**Fukushima-shi, Fukushima 960-8054 (JP)**

• **Maruyama, Hiroyuki**
**Fukushima-shi, Fukushima 960-8054 (JP)**
• **Takano, Masayuki**
**Fukushima-shi, Fukushima 960-8054 (JP)**
• **Miura, Yusuke**
**Fukushima-shi, Fukushima 960-8054 (JP)**

(74) Representative: **Piésold, Alexander James**
**Dehns**
**St Bride's House**
**10 Salisbury Square**
**London**
**EC4Y 8JD (GB)**

(54) **Diesel engine exhaust gas purification apparatus**

(57)     An exhaust gas purification apparatus (10) for purifying harmful substances contained in an exhaust gas exhausted from a diesel engine (DE) is capable of reducing $NO_X$ by 80% and $SO_X$ by 0.1%. The exhaust gas purification apparatus (10) comprises an exhaust gas purification tower (1) in which absorption liquid (2) to absorb the harmful substances is stored, an exhaust gas dispersing pipe (3) which is installed rotatably in the absorption liquid in the exhaust gas purification tower, gas dispersing holes (3a) formed on the exhaust gas dispersing pipe, a rotation drive unit (4) for rotating the exhaust gas dispersing pipe, and an exhaust gas inlet pipe (7) through which the exhaust gas is introduced into the exhaust gas dispersing pipe (3), wherein the exhaust gas introduced into the exhaust gas dispersing pipe (3) that is kept rotating is discharged through the gas dispersing holes (3a) into the absorption liquid (2) to create bubbles of the exhaust gas which are dispersed in the absorption liquid (2) and have the harmful substances absorbed in the absorption liquid (2).

FIG. 1A

EP 2 514 512 A1

**Description**

Technical Field

The present invention is related a diesel engine exhaust gas purification apparatus to purify exhaust gas exhausted from a diesel engine.

Background Art

The third regulation draft on "Regulation on environmental pollution from ships" was adopted in 2008 at the 57th Marine Environment Protection Committee (MEPC) of International Maritime Organization (IMO). This third draft includes a regulation to reduce an amount of $NO_X$ gas exhausted by 80% as of 2016. In addition, this regulation states that fuel containing sulfur used in the general sea areas is reduced by 0.5%.
Since almost all ships are equipped with a diesel engine, it is necessary to take countermeasures on exhaust gas discharged from the diesel engine in a hurry.
There is a difference in the properties of the exhaust gas between the diesel engine and the petrol engine, naturally because there is a difference in not only each of the boiling temperature, the burning temperature, and the ignition temperature but also the content of sulfur between the heavy fuel oil used by the diesel engine and the petrol used by the petrol engine.
The diesel engine mounted on the ship exhausts $NO_X$ (nitrogen oxide), $SO_X$ (sulfur oxide) and PM (particulate matter, soot and smoke).
The most part of $NO_X$ exhausted from the diesel engine is occupied by, so called, thermal $NO_X$ that is generated while the fuel is burning. In order to reduce an amount of $NO_X$ that is generated, such measures as improving the burning timing, spraying water into an engine and adding water to fuel to control the burning temperature are taken. Alternatively, the exhaust gas recirculation method (EGR) is taken to reduce the amount of the thermal $NO_X$ that is generated by lowering the oxygen concentration which leads to lowering the burning temperature.
However, the $NO_X$ reduction rates achieved by these measures are not higher than 20 to 50% and as high a $NO_X$ reduction rate as 80% that is required cannot be achieved.

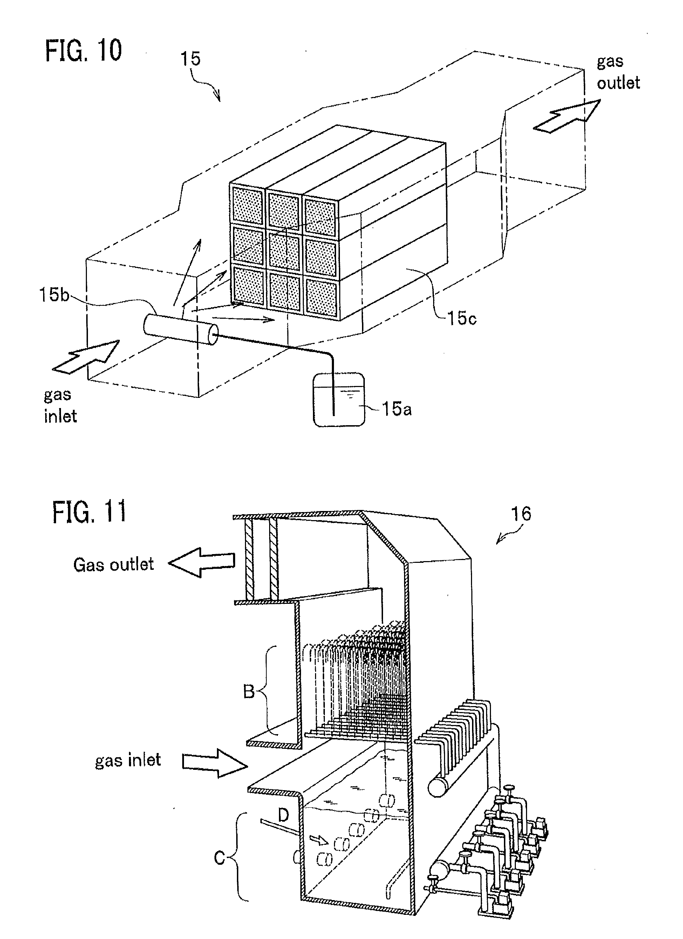

FIG. 10 shows SCR (Selective Catalytic Reduction) of a conventional $NO_X$ purification apparatus.
As is shown in FIG. 10, when exhaust gas from an diesel engine is introduced into a conventional $NO_X$ purification apparatus 15, urea water is sprayed out from an urea spraying nozzle 15b and urea in the urea water is hydrolyzed into ammonia. Then the exhaust gas passes through a catalyst layer 15c which is filled with titan-vanadium (titanium-vanadium) catalysts and $NO_X$ reacts with ammonia in the catalyst layer 15c, decomposes into $N_2$ and $H_2O$ and is purified (see, for instance, "Engine room is changing, Technology Trend of Exhaust Gas Purification ", Koichi HIRATA, Page 11 in Lecture Summary Book of Ninth Seminar of National Maritime Research Institute issued by National Maritime Research Institute in Sep. 11, 2009).
However SCR has a problem with a relatively high maintenance cost mainly for taking measures on unreacted ammonia being discharged which
results from inappropriately controlling an amount of the sprayed urea water that ought to be adjusted according to the exhaust gas temperature having an effect on the property of the catalysts purifying $NO_X$, an amount of the exhaust gas and a $NO_X$ concentration of the exhaust gas, and for regularly replacing catalysts which can be deteriorated by $SO_X$ in a used fuel if the used fuel contains $SO_X$.
Moreover there is another problem with the conventional $NO_X$ purification apparatus 15 being not capable of purifying $SO_X$ and PM.
FIG. 11 is a perspective view for a scrubber of a conventional $SO_X$ purification apparatus of a gas-liquid contact type.
As is shown in FIG. 11, the scrubber 16, which is a gas-liquid contact type of the conventional $SO_X$ purification apparatus, an intermediate portion from which is sprayed out absorption liquid through which the exhaust gas is made to flow. $SO_X$ is absorbed in the absorption liquid and removed from the exhaust gas (See, for instance,
http://www.mhi.co.jp/products/detail/fgdp_dcfs.html, on Double Contact Flow Scrubber by Mitsubishi Heavy Industry, LTD., searched on March 9, 2011)
However, since the scrubber 16 needs a large amount of the absorption liquid such as electrolyzed sea water for the exhaust gas to flow through, the scrubber 16 becomes so large as to be difficult to be installed in a ship and has a problem with a high running cost and especially a high electric power cost.
Furthermore, there is a general purification apparatus used to remove other harmful substances. This general purification apparatus is capable of generating bubbles from a mesh plate fixed on a lowest surface of or in the absorption liquid. However the generated bubbles are not uniformly dispersed in the absorption liquid and it is difficult to have the exhaust gas come in sufficient contact with the bubbles. Then, it is necessary to have multiple purification units in an apparatus to sufficiently purify the exhaust gas, which leads to the apparatus becoming large and resistance on the exhaust gas to flow through becoming large. As a result, this general purification apparatus has a problem with both a high initial installation cost and a high running cost.

Furthermore, since plural kinds of substances cannot be purified with such conventional exhaust gas purifying apparatuses as a scrubber and a bubble tower (not shown), a couple of apparatuses are needed to purify the plural kinds of substances. There has been an objective to develop an single exhaust gas purifying apparatus to purify all kinds of harmful substances such as $NO_X$, $SO_X$ and PM.

In order to work out the above mentioned problems with which the conventional exhaust gas purification apparatus has, the objective of the present invention is to provide a diesel engine exhaust gas purification apparatus, which is capable of efficiently purifying harmful substances inclusive of $NO_X$, $SO_X$ and PM that are exhausted from a diesel engine and being installed at a relatively small area inside a ship and driven and maintained at a relatively low cost, and enables using not only chemical absorption liquids but also other liquids such as water or sea water.

Summary of Invention

According to a first aspect of the present invention, there is provided an exhaust gas purification apparatus for purifying harmful substances contained in an exhaust gas exhausted from a diesel engine, wherein said exhaust gas purification apparatus comprises an exhaust gas purification tower in which absorption liquid to absorb the harmful substances is stored an exhaust gas dispersing pipe which is installed rotatably in the absorption liquid in the exhaust gas purification tower, gas dispersing holes formed on the exhaust gas dispersing pipe, a rotation drive unit for rotating the exhaust gas dispersing pipe, and an exhaust gas inlet pipe through which the exhaust gas is introduced into the exhaust gas dispersing pipe, wherein the exhaust gas introduced into the exhaust gas dispersing pipe that is kept rotating is discharged through the gas dispersing holes into the absorption liquid to create bubbles of the exhaust gas which are dispersed in the absorption liquid and have the harmful substances absorbed in the absorption liquid.

Preferably, in the exhaust gas purification apparatus, a rotation speed of the exhaust gas dispersing pipe is controlled and changed to have diameters of the bubbles kept within a range between 1 and 5000$\mu$m regardless of a change in an amount of the harmful substance in the exhaust gas in accordance with the rotation speed, a pressure of the exhaust gas, a kind of heavy fuel oil and a combustion temperature of the diesel engine.

Preferably, the exhaust gas purification apparatus comprises a heat exchanger to collect heat generated by a temperature rise of the absorption liquid.

Preferably, in the exhaust gas purification apparatus the used absorption liquid which has absorbed the harmful substances is discharged from the exhaust gas purification tower while the fresh absorption liquid which has not absorbed the harmful substances is supplied into the exhaust gas purification apparatus.

Preferably, in the exhaust gas purification apparatus the absorption liquid is sea water.

According to the exhaust gas purification apparatus of the first aspect of the present invention, harmful substances discharged from the diesel engine

are efficiently purified without lowering the performance of the diesel engine. This exhaust gas purification apparatus for the diesel engine is made so small that it is capable of being installed in a relatively small installation space in a ship and keeping its running cost and maintenance cost at minimum.

Furthermore, since so small bubbles as desired are created by rotating the exhaust gas dispersing pipe to shear the bubbles of the exhaust gas coming out of gas dispersing holes and dispersed in the absorption liquid, the bubbles created becomes so small that a contact area of the exhaust gas with the absorption liquid increases, which leads to the purification being enhanced.

The rotation speed of the exhaust gas dispersing pipe may be inverter-controlled with an inverter motor in such a way that diameters of the bubbles coming out of the exhaust gas dispersing pipe that is rotating are kept in a range between 1 and 5000$\mu$m. Therefore the rotation speed of the exhaust gas dispersing pipe may be changed in response to any change in the exhaust gas pressure, and the bubbles, whose diameters are most suited for the reaction in which the exhaust gas dissolves and is absorbed in the absorption liquid, are dispersed in the absorption liquid. As a result, the purification efficiency is enhanced.

Since the exhaust gas purification apparatus may be provided with a heat exchanger to collect heat generated by a temperature rise of the absorption liquid, it is possible to prevent the temperature of the absorption liquid by absorbing the heat and collect sensible heat in the exhaust gas.

Since the exhaust gas purification apparatus may be provided with an absorption liquid circulation unit to discharge from the exhaust gas purification tower the used absorption liquid which has absorbed the harmful substances and supply the fresh absorption liquid which has not absorbed the harmful substances into the exhaust gas purification tower, the absorption liquid is recycled, which is an environment friendly use of the absorption liquid.

Since the exhaust gas purification apparatus may use sea water for the absorption liquid, this exhaust gas purification apparatus is capable of being applied to a diesel engine for ships and being operated safely.

Brief Description of Drawings

Preferred embodiments of the present invention will now be described in greater detail by way of example only and with reference to the accompanying drawings in which:

FIG. 1A is a cross-sectional view for a diesel engine exhaust gas purification apparatus of the present invention;

FIG. 1B is a cross-sectional view for the diesel engine along exhaust gas purification apparatus along the A-A line indicated in FIG. 1A;

FIG. 1C is an elevation view for a mechanical speed change drive unit in the diesel engine along exhaust gas purification apparatus;

FIG. 2A is an illustrative figure for a first modified example of the diesel engine exhaust gas purification apparatus of the present invention having a rotatable exhaust gas dispersing pipe installed vertically to supply and collect the gas through an upper end of the exhaust gas dispersing pipe;

FIG. 2B is an illustrative figure for a second modified example of the diesel engine exhaust gas purification apparatus of the present invention having a rotatable exhaust gas dispersing pipe installed vertically to supply gas through a lower end face of the rotatable exhaust gas dispersing pipe and collect the gas through the upper end of the exhaust gas dispersing pipe;

FIG. 3 is an illustrative figure for a third modified example of the diesel engine exhaust gas purification apparatus of the present invention;

FIG. 4 is an illustrative figure for a fourth modified example of the diesel engine exhaust gas purification apparatus of the present invention;

FIG. 5 is a graph showing a relationship between the rotation speed ratio of an exhaust gas dispersing pipe to a reference and the mean bubble diameter;

FIG. 6 is a graph showing a relationship between the mean bubble diameter and the specific contact area ratio of bubbles for a unit volume of liquid to a reference;

FIG. 7 is a graph showing a relationship between a specific contact area ratio of bubbles for a unit volume of liquid to a reference and the ratio of the volumetric mass transfer coefficient to a reference;

FIG. 8 is a graph showing a relationship between the ratio of the volumetric mass transfer coefficient to a reference and the removal ratio of nitrogen oxides to a reference;

FIG. 9 shows a layout of a diesel engine and an exhaust gas purification apparatus inclusive of a harmful substance removing unit;

FIG. 10 is an illustrative view for a conventional $NO_X$ purification apparatus (SCR); and

FIG. 11 is an illustrative perspective view for a scrubber in a conventional $SO_X$ purification apparatus.

Embodiment for Practicing the Invention

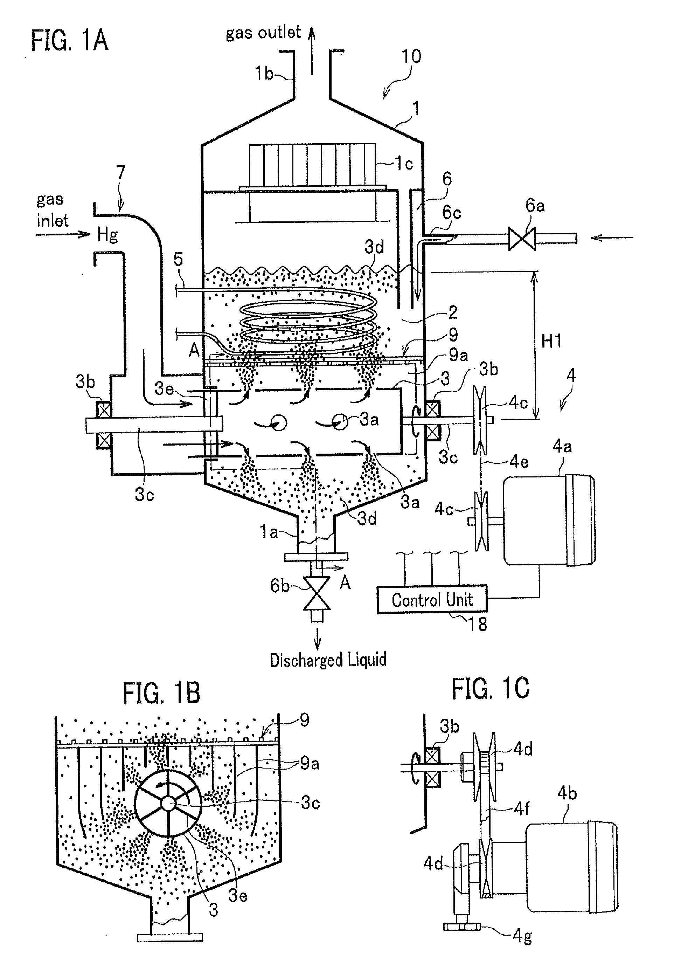

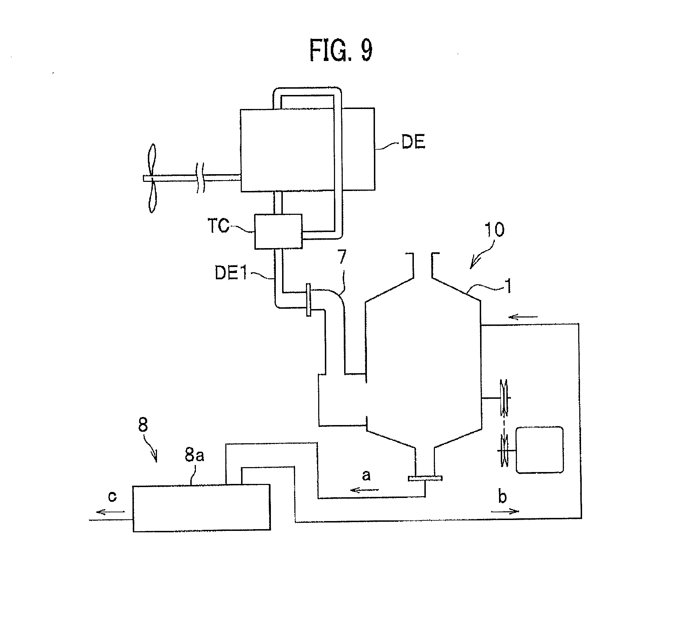

An embodiment of the present invention is to be explained appropriately with reference to the figures attached. As is shown in FIG. 1A, an exhaust gas purification apparatus 10 comprises a gas purification tower 1 in which absorption liquid 2 to be used for purification is stored, an exhaust gas dispersing pipe 3 which is installed to be rotatable in the gas purification tower 1 and has gas dispersing holes 3a formed thereon, a rotation drive unit 4 to rotate the gas dispersing pipe 3 and an exhaust gas inlet pipe 7 through which exhaust gas is introduced into the exhaust gas dispersing pipe 3. The exhaust gas purification apparatus 10 further comprises a heat exchanger 5 to collect heat from the absorption liquid 2 whose temperature rises, a harmful substance removing unit 8 to supply the absorption liquid 2 to the exhaust gas purification tower 1 (See FIG. 9) and a control unit to control a rotation speed of the exhaust gas dispersing pipe 3. As is shown in FIG. 9, the exhaust gas flow inlet pipe 7 of the exhaust gas purification apparatus 10 is connected with an exhaust gas pipe DE1 of a ship diesel engine DE.

A turbo-charger TC may be installed between the diesel engine DE and the exhaust gas flow inlet pipe 7.

The absorption liquid 2 is collected into a tank 8a of the harmful substance removing unit 8 and discharged into the sea after harmful substances contained in the absorption liquid 2 are removed. The absorption liquid may be recirculated into the exhaust gas purification apparatus 10.

< Structure of Exhaust Gas Purification Tower >

As is shown in FIG. 1A, the exhaust gas purification tower 1 is substantially in a square pillar shape or a circular cylinder shape and supported by a plurality of legs which are not indicated in FIG. 1A to be oriented vertically with a drainage nozzle 1a disposed at the bottom. Both an upper end portion and a lower end portion of the exhaust gas purification tower 1 are substantially in a square pyramid shape or a circular cone shape. An exhaust gas outlet 1b, through which the exhaust gas is discharged to the atmosphere after purified, is attached onto the upper end portion of the exhaust gas purification tower 1.

In the exhaust gas purification tower 1 is stored the absorption liquid 2 whose liquid level in the exhaust gas purification tower 1 is kept at a predetermined absorption liquid height H1.

The exhaust gas dispersing pipe 3 is disposed at a lower position in the exhaust gas purification tower 1, kept in the absorption liquid and supported rotatably. A flow regulating plate 9 (See FIG. 1B) and the heat exchanger 5 are disposed above the exhaust gas dispersing pipe 3 in the exhaust gas purification tower 1 and kept in the absorption liquid 2.

The exhaust gas flow inlet pipe 7, through which the exhaust gas is introduced into the exhaust gas purification tower 1, is attached onto an outer side face of the lower portion of the exhaust gas purification tower 1, for instance, the outer side face of the lower left portion of the exhaust gas purification tower 1 as is indicated in FIG. 1A. A pressure sensor not shown in FIG. 1A to measure an exhaust gas pressure Hg is attached in the exhaust gas flow inlet pipe 7.

The exhaust gas pressure Hg on the exhaust gas exhausted from a diesel engine DE for a ship is higher than a liquid pressure corresponding to an absorption liquid height H1 in the exhaust gas purification tower 1. That is, the exhaust gas pressure Hg > the liquid pressure corresponding to an absorption liquid height H1 and once the diesel engine DE starts up, the exhaust gas fills the exhaust gas flow inlet pipe 7 and the gas dispersing pipe 3 and is blown out from the gas dispersing holes 3a of the exhaust gas dispersing pipe 3. When the diesel engine is out of operation, the absorption liquid 2 fills the gas dispersing pipe 3 and the liquid level of the absorption liquid 2 rises to as high as an upper portion of the exhaust gas flow inlet pipe 7 and balances and stops at a height as high as the absorption liquid height H1.

There are valves 6a, 6b installed outside the exhaust gas purification tower 1 to change such parameters as the height H1 of the absorption liquid 2 and the flow rate Q to adjust a supply amount and a discharge amount of the absorption liquid.

< Absorption Liquid >

The absorption liquid 2 is a liquid to absorb or disperse harmful substances such as $NO_X$, $SO_X$ and PM which are contained in the exhaust gas and for instance, sea water, electrolyzed sea water, water, or magnesium hydroxide solution is preferably used for the absorption liquid 2.

The absorption liquid 2 is supplied through the valve 6a and a liquid supply inlet to a liquid supply pipe 6 disposed in the exhaust gas purification tower 1. The used absorption liquid that has absorbed the harmful exhaust gas is collected into a tank 8a of the exhaust gas purification tower 1.

As is shown in FIG. 9, PM separated by a dispersing action on the exhaust gas dispersing pipe 3 that is rotating is collected on a filter that is not shown and disposed in the tank 8a.

In addition, $NO_X$ contained in the absorption liquid 2 becomes nitric acid ($HNO_3$) after being absorbed in water and this nitric acid is neutralized with such an alkali material as caustic soda and made harmless.

$SO_X$ contained in the absorption liquid 2 becomes sulfurous acid ($H_2SO_3$) or sulfuric acid ($H_2SO_4$). This sulfurous acid ($H_2SO_3$) is made to be oxidized to sulfuric acid ($H_2SO_4$). After the resultant sulfuric acid is neutralized with such an alkali material as magnesium hydroxide and made harmless, the absorption liquid 2 is disposed of (Arrow c). Alternatively this absorption liquid 2 after made harmless may be reused and recirculated (Arrows a, b).

< Structure of Exhaust Gas Dispersing Pipe >

As is shown in FIG. 1A and FIG. 1B, the exhaust gas dispersing pipe 3, to which rotation shafts coaxially disposed are fixed, is installed rotatably at the lower portion in the exhaust gas purification tower 1 with the rotation shafts 3c kept horizontal in the absorption liquid 2. One end (left end in FIG. 1A) of the rotatable exhaust gas dispersing pipe 3 is fixed to a rotation shaft 3c and the other end (right end in FIG. 1A) of the rotatable exhaust gas dispersing pipe 3 is in a cylindrical shape with a bottom face and fixed to another rotation shaft 3c with 6 ribs 3e. There are plural gas dispersing holes 3a, 3a, --- bored through the circumferential face of the exhaust gas dispersing pipe 3 in the cylindrical shape. The exhaust gas is introduced into the exhaust gas dispersing pipe 3 through the exhaust gas flow inlet pipe 7 that is fixed at an end of the exhaust gas dispersing pipe 3.

Alternatively the exhaust gas may be introduced into the exhaust gas dispersing pipe 3 from both ends of the exhaust gas dispersing pipe 3.

A rotation shaft 3c, whose diameter is smaller than that of the exhaust gas dispersing pipe 3, is fixed to and extends from each of right and left ends of the exhaust gas dispersing pipe 3. One of the extended rotation shafts 3c is supported by a bearing 3b that is fitted on an outer wall of the exhaust gas flow inlet pipe 7. The other extended rotation shaft 3c is supported by another bearing 3b that is fitted through a seal not shown.

The exhaust gas dispersing pipe 3 is rotatably supported by the bearing 3b, 3b on both ends and is capable of rotating.

The gas dispersing holes 3a, 3a, --- are nozzles through which the exhaust gas is discharged to the absorption liquid and also referred to as gas dispersing nozzles. These holes are referred to as the gas dispersing holes 3a because no protruding portion like a nozzle is attached to them and each of the gas dispersing holes 3a may have a small protruding portion.

In order to have the exhaust gas dispersing pipe 3 rotating at a high rotation speed, it is preferable to have the gas dispersing nozzles without protruding portions to have relatively small rotation resistance applied from the absorption liquid 2 to the gas dispersing nozzles. However a protruding portion to function to stir the absorption liquid 2 may be formed on each of the gas dispersing holes 3a.

The rotatable exhaust gas dispersing pipe is in a cylindrical shape and has a diameter approximately between 100 and 500 mm and a length between 1,000 mm and 2,000 mm and is made of a stainless steel plate. The exhaust gas dispersing holes 3a, 3a, --- have a diameter approximately 1 to 30 mm long and are distributed preferably at an interval of 10 to 100 mm. The shape of the exhaust gas dispersing hole 3a is preferably in a circular shape but not limited to the circular shape and may be in an ellipsoidal shape, a rectangular shape or other shape.

A significant feature of the present invention is to have bubbles of the exhaust gas blowing out from the gas dispersing holes 3a, 3a, --- sheared into much smaller bubbles by a thin plate on the circumference of the exhaust gas dispersing pipe 3 rotating at a high rotation speed. Making use of this shearing operation, it is possible to produce as small bubbles as desired. The much smaller size of bubble 3d as desired is easily created by the exhaust gas dispersing pipe 3 rotating a high rotation speed. The rotation speed of the exhaust gas dispersing pipe 3 is controlled by the control unit 18 according to the exhaust gas flow rate and the exhaust gas pressure Hg. In addition, the rotation speed of the exhaust gas dispersing pipe 3 is controlled by the control unit 18 in such a way that the diameters of the dispersed bubbles 3d are between 1 and 5000 $\mu$m.

The bubbles 3d created after passing through the gas dispersing holes 3a are dispersed in the absorption liquid 2 and takes more than a predetermined time to come up through a flow regulating plate 9 in the absorption liquid 2. While the bubbles 3d are in the absorption liquid, harmful substances in the exhaust gas are absorbed. Thus the exhaust gas is purified and discharged to the atmosphere through the exhaust gas outlet 1b installed at an upper portion of the exhaust gas purification tower 1.

< Operation of Rotation Drive Unit >

A rotation drive unit 4 is disposed outside the apparatus, rotates the gas dispersing pipe 3 and controlled through an inverter (not shown) by the control unit 18 having the inverter to change the rotation speed of the exhaust gas dispersing pipe 3 to any predetermined rotation speed.

As is indicated in FIG. 1A, a variable speed control is performed on the rotation drive unit 4 with an inverter control that has been known. The rotation speed of an inverter motor 4a is easily altered by changing the drive frequency. The inverter motor 4a may be connected directly with the rotation shaft 3c of the exhaust gas dispersing pipe 3 through a coupling or connected with the rotation shaft 3c through pulleys 4c, 4c and a V-belt 4e to be accelerated and decelerated as is shown in FIG. 1A.

In the present invention the rotation speed of the exhaust gas dispersing pipe 3 is controlled in such a way that the circumferential speed is kept within a range between 2.5 and 10 m/s. When the circumferential speed is within this range, bubbles 3d become so small that the contact area of the bubbles 3d become very large and that it is possible to remove 80% of $NO_X$ from the exhaust gas because a volumetric mass transfer coefficient to be explained later is becomes very high.

< Operation of Heat Exchanger >

A heat exchanger 5, which is shown in FIG. 1A, is disposed between an absorption liquid surface and the exhaust gas dispersing pipe 3 in the absorption liquid 2. The heat exchanger 5 has such an alternative gas as ammonia, carbon dioxide and water vapor to absorb heat transferred from the absorption liquid 2 heated to a high temperature by the heat of the exhaust gas to cool the absorption liquid. Since a temperature and a pressure of the exhaust gas exhausted from the diesel engine are very high, the absorption liquid is heated to the high temperature and prevented from boiling by being cooled. In addition, sensible heat in the exhaust gas is collected and utilized for waste heat power generation, generating steam to heat fuel or other use.

A mist catcher 1c, which is shown in FIG. 1A and disposed at a upper space in the exhaust gas purification tower 1, is alternatively called a humidity catcher and an unit top catch mists being splashed by bubbles 3d coming up off the absorption liquid 2 or being generated by the absorption liquid 2 vaporing.

The flow regulating plate 9 is disposed between the gas dispersing pipe 3 and the heat exchanger 5, as is seen in FIG. 1A and 1B. The flow regulating plate 9 is a mesh plate with a plurality of grids which is not shown in the attached figures and has a plurality of square holes. A set of agglomerated bubbles are divided into individual separated bubbles through this flow regulating plate 9 that has grids in a square shape.

A plurality of obstruction plates 9a are jointed with and fixed vertical to a lower face of the flow regulating plate 9 and disposed in parallel with a direction in which the bubbles 3d are coming up from the exhaust gas dispersing pipe 3. The length of an obstruction plate 9a varies depending on how far apart the obstruction plate 9a is from the exhaust gas dispersing pipe 3 and as the obstruction plate 9a is farther apart from the exhaust gas dispersing pipe 3, the obstruction plate 9a is gradually longer. A lower portion of each of the plurality of the obstruction plates 9a is curved toward the exhaust gas dispersing pipe 3 to have the bubbles distributed homogeneously between the spaces between adjacent obstruction plates 9a and prevent a lot more of the bubbles from coming into any space than the other spaces.

The control unit 18 is disposed outside the apparatus and controls the exhaust gas dispersing pipe 3 to adjust the rotation speed of the exhaust gas dispersing pipe 3 to a predetermined rotation speed according to an exhaust gas flow rate and the exhaust gas pressure Hg, since the mean bubble diameter of the bubble 3d is estimated based on the exhaust gas flow rate which is either estimated with an engine rotation speed meter (not shown), or measured with a gas flow meter attached in the exhaust gas flow inlet pipe 7, the exhaust gas pressure Hg measured with a pressure sensor attached onto the exhaust gas flow inlet pipe 7 and the rotation speed of the exhaust gas dispersing pipe 3. The control unit 18 may control the rotation speed of the exhaust gas dispersing pipe 3 to the predetermined value according to the diameter of the bubble 3d which is actually measured and transmitted to the control unit 18.

The inverter motor 4a in the rotation drive unit 4 is controlled through the inverter and rotates the exhaust gas dispersing pipe 3 at a desired rotation speed adjusted through the inverter. As a result the diameter of the bubble 3d is controlled and kept between 1 and 5000 $\mu$m.

Next, a modified example of the diesel exhaust gas purification apparatus 10 is explained.

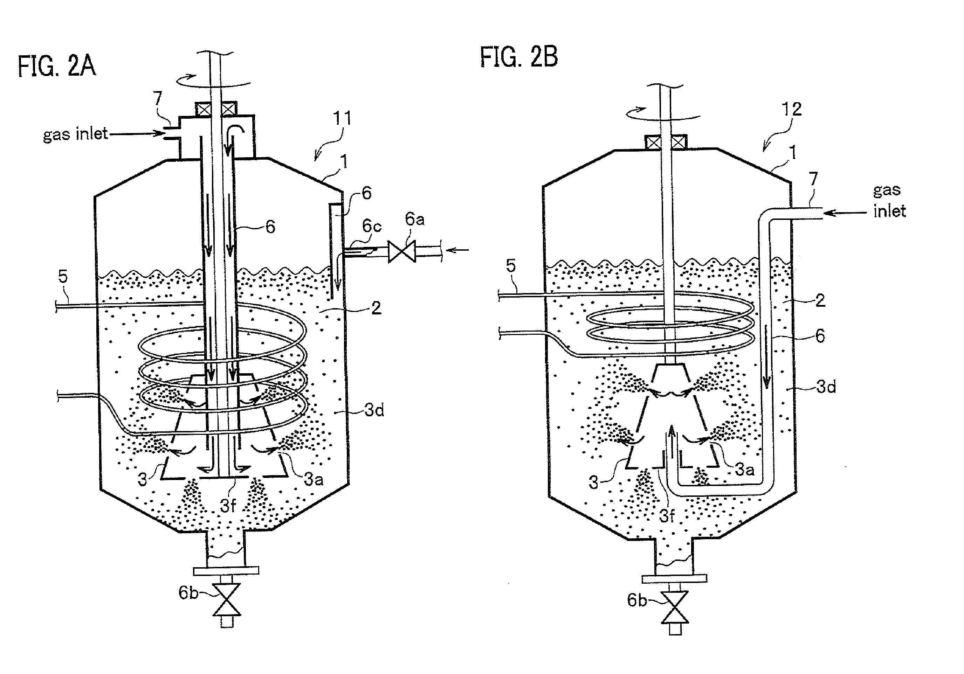

The structure and the pipes of the exhaust gas purification tower 1 and the exhaust gas dispersing pipe 3 may be altered to those indicated in FIG. 2A to FIG. 4.

The exhaust gas purification apparatus 11 of a modified example 1 shown in FIG. 2A has the exhaust gas purification tower 1 of a vertical type and the exhaust gas dispersing pipe 3 of a vertical type as well. The exhaust gas is supplied to the exhaust gas dispersing pipe 3 through the exhaust gas flow inlet pipe 7 disposed an upper end portion of the exhaust gas purification tower 1.

In this modified example, the exhaust gas dispersing pipe 3 is in a circular truncated cone shape whose cross section is in a trapezoidal shape, instead of a cylindrical shape. The exhaust gas dispersing pipe in this shape may be utilized. An exhaust gas purification apparatus 12 of a modified example 2 as indicated in FIG. 2B has a rotary type exhaust gas dispersing pipe 3 that is vertically disposed and the exhaust gas is introduced into the exhaust gas dispersing pipe 3 through a lower face 3f of the exhaust gas dispersing pipe 3. The exhaust gas may be supplied into the exhaust gas dispersing pipe 3 in this way.

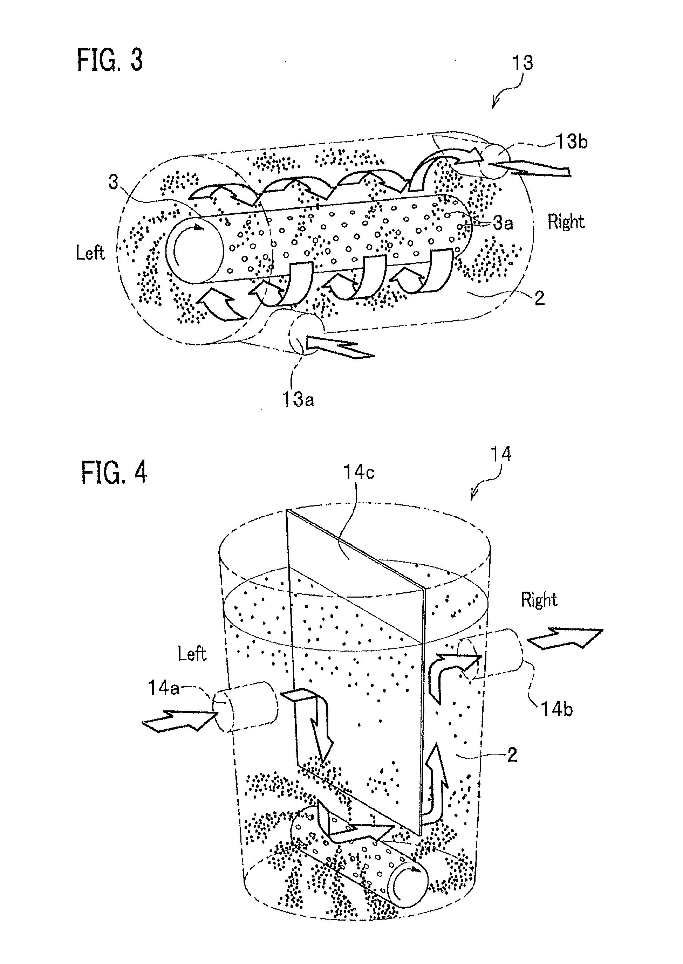

As is shown in FIG. 3, an exhaust gas purification apparatus 13 of a modified example 3 has an exhaust gas purification tower 1 disposed horizontally, and an exhaust gas dispersing pipe 3 is installed horizontally in the exhaust gas purification tower 1 and coaxial with the exhaust gas purification tower 1 and capable of rotating. The exhaust gas coming from through the exhaust gas flow inlet pipe 7, which is not shown, may be supplied into the exhaust gas dispersing pipe 3 through one end portion or both end portions of the exhaust gas dispersing pipe 3 from the exhaust gas inlet pipe. In FIG. 3 the absorption liquid 2 is supplied into the exhaust gas dispersing pipe 3 through a supply inlet 13a disposed on the left-lower portion of the exhaust gas dispersing pipe 3 and discharged outside through a discharge outlet 13b disposed on the right-upper portion of the exhaust gas dispersing pipe 3. The embodiment of the exhaust gas purification apparatus 10 includes this modified example.

The exhaust gas purification apparatus 14 of a modified example 4, which is shown in FIG. 4, has an exhaust gas purification tower 1 which is substantially in a cylindrical shape and disposed vertically. A separation plate 14c is disposed inside the exhaust gas purification tower 1 so that an inner space of the exhaust gas purification tower 1 is divided in two. The absorption liquid 2 in the exhaust gas purification tower 1 is divided horizontally in two by the separation plate 14c.

As a result the absorption liquid 2 is supplied into the exhaust gas purification apparatus 14 from through a supply inlet 14a and discharged outside through a discharge outlet 14b. Thus the supplied absorption liquid 2 has to flow through under the separation plate 14c and be discharged. Therefore a distance the absorption liquid flows becomes double a distance it flows in the exhaust gas purification tower 1 without the separation plate 14c. The embodiments of the exhaust gas purification apparatus 10 include this exhaust gas purification apparatus 14.

Next is explained a method to collect PM in the exhaust gas.

PM contained in the exhaust gas is dispersed in the absorption gas together with bubbles of the exhaust gas, as the exhaust gas comes out through the exhaust gas dispersing pipe 3 that is rotating. Making use of this dispersing action, PM is separated and collected on a filter.

In general, gas dissolving and being absorbed in liquid is explained according the following equation (1).

$$k_L \cdot a = L \cdot \Delta CB / (A \cdot hT \cdot v \cdot H \cdot PA) \cdots \cdots (1)$$

$k_L \cdot a$ : Volumetric mass transfer coefficient
$k_L$ : Mass transfer coefficient
a : Bubble boundary face area
L : Liquid flow rate
$\Delta CB$ : Change in concentration of reacted substance in the liquid (Absorbed amount)
A : Cross section area of apparatus
hT : Height of gas-liquid mixture phase
v : Stoichiometric coefficient
H : Henry coefficient
PA : Partial pressure of absorbed gas at inlet and outlet

As is understood from the above equation (1), it is necessary to keep $k_L \cdot a$ equal to or more than a predetermined value in order to keep $\Delta CB$ equal to or more than a predetermined value. In case the value, a, varies depending on an amount of gas, it is not possible to keep $\Delta CB$(Parameter for Performance).

Therefore an amount of gas that dissolves and is absorbed in liquid is dependent on the volumetric mass transfer coefficient, $k_L \cdot a$, which is a product of the mass transfer coefficient, $k_L$, which is inherent to a kind of gas, and the bubble boundary face area, a. The larger the volumetric mass transfer coefficient, the more of substances contained in the gas dissolves and is absorbed in the liquid for a predetermined time.

If the volumetric mass transfer coefficient, $k_L \cdot a$ is increased by increasing the bubble boundary face area, a, the harmful substances are purified efficiently and the exhaust gas purification apparatus 10 is made smaller.

The volumetric mass transfer coefficient, $k_L \cdot a$, is dependent on the temperature and the pressure and the bubble boundary face area, a, is dependent on the diameter of the bubble 3d and how the bubbles 3d are dispersed in the absorption liquid.

In order to maintain the performance of a diesel engine and keep the running cost at minimum, it is not sensible to change the temperature and the pressure of the exhaust gas. Accordingly increasing volumetric mass transfer coefficient, $k_L \cdot a$, by increasing the bubble boundary face area, a, is a best way to clear "Restriction on environmental pollution by ships".

The exhaust gas dispersing pipe 3 that is rotating is held in the absorption liquid and the bubbles of the exhaust gas coming out of the exhaust gas dispersing pipe 3 have diameters kept within a range between 1 and 5000 µm and are dispersed intensively throughout the absorption liquid, when the exhaust gas dispersing pipe 3 is rotating at a high rotation speed. As a result, the exhaust gas in the bubbles is capable of dissolving and being absorbed in the absorption liquid most efficiently.

In addition, since the exhaust gas is dispersed intensively in the absorption liquid, the contact area of the bubbles with the absorption liquid becomes so large that sensible heat in the exhaust gas is much more efficiently transmitted to the absorption liquid than the heat transmission through a heat transmission pipe.

This feature enables the heat in the exhaust gas which is at a relatively low temperature to be efficiently collected. The heat does not necessarily need to be collected and the exhaust gas purification apparatus may operate just for cooling the exhaust gas.

The exhaust gas purification apparatus may directly take out vapor from the exhaust gas purification tower 1 to generate electricity or utilize the vapor for process vapor. In addition, since the heat exchanger 5 is installed inside the exhaust gas purification tower 1, it is possible to absorb heat from the absorption liquid 2 by making use of liquid or gas as heat medium and supply the heat for other process.

< Example >

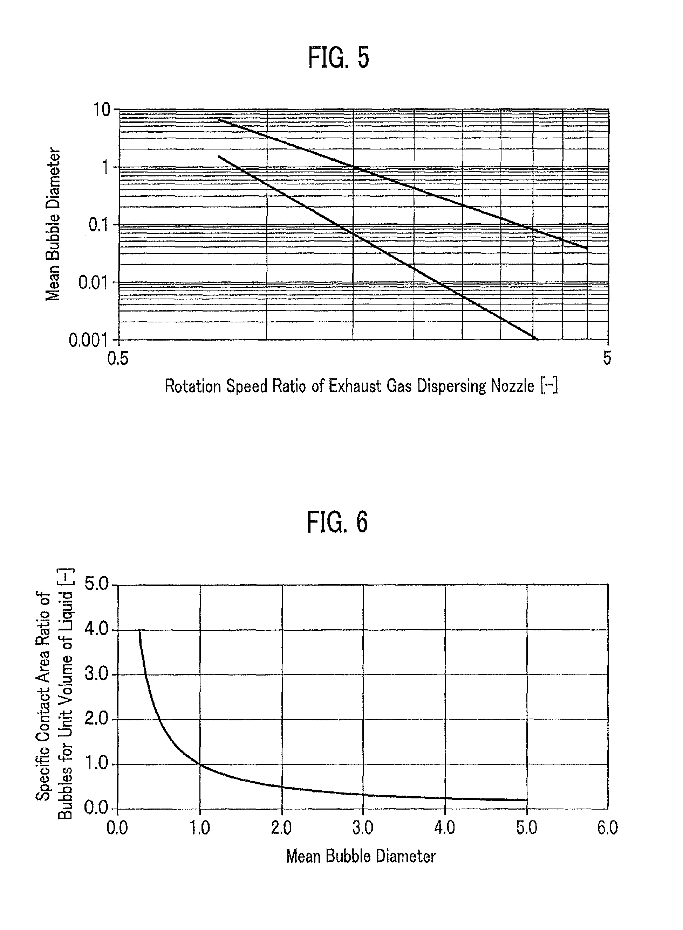

FIG. 5 is a graph showing a relationship between the ratio of the rotation speed of the exhaust gas dispersing pipe to a reference and the mean bubble diameter.

As is seen in FIG. 5, the mean bubble diameter is inversely proportional to the ratio of the rotation speed of the exhaust gas dispersing pipe to a reference indicated by the horizontal axis and become smaller as the ratio of the rotation speed of the exhaust gas dispersing pipe to a reference increases.

FIG. 6 is a graph showing a relationship between the mean bubble diameter and the specific contact area ratio of bubbles for a unit volume of liquid to a reference.

As is seen in FIG. 6, the specific contact area ratio of bubbles for a unit volume of liquid is inversely proportional to the mean bubble diameter indicated by the horizontal axis and rapidly increases as the mean bubble diameter becomes smaller.

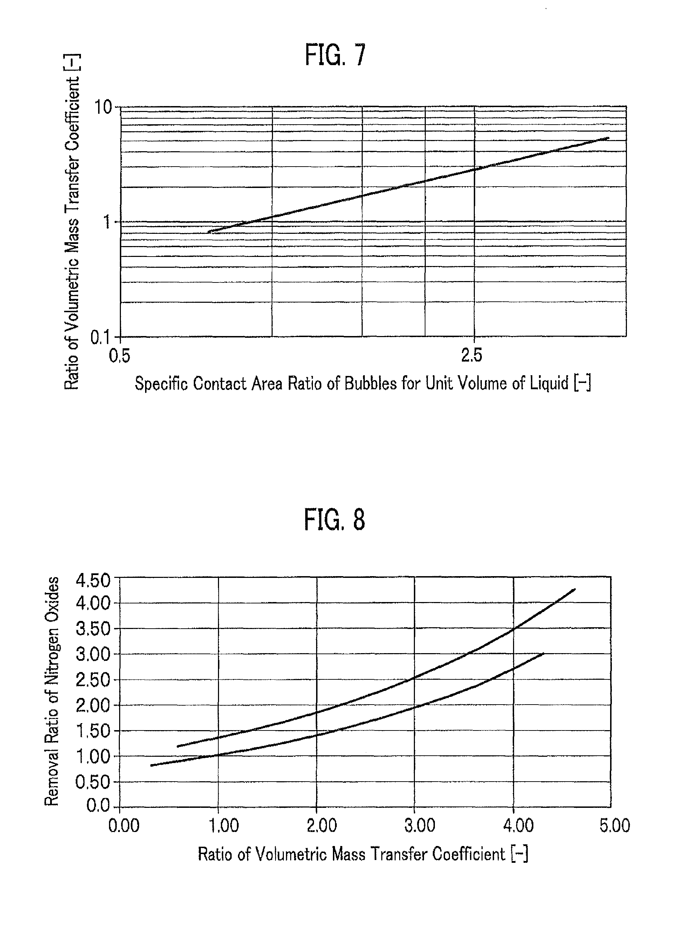

FIG. 7 is a graph showing a relationship between a specific contact area ratio of bubbles for a unit volume of liquid to a reference and the ratio of the volumetric mass transfer coefficient to a reference. It should be noted that the ratio of the volumetric mass transfer coefficient indicated by the vertical axis increases as the specific contact area ratio of bubbles for a unit volume of liquid capacity increases indicated by the horizontal axis.

That is, according to the present invention, the rotation speed of the exhaust gas dispersing pipe 3 is changed in response to a change in the conditions on the exhaust gas in order to keep the purification capability better than required. As a result, the bubbles 3d, whose diameters are suited for the purification, are always generated, the gas-liquid contact area, which is suited for the purification, is kept and the volumetric mass transfer coefficient is kept as high as desired.

FIG. 8 is a graph showing a relationship between the ratio of the volumetric mass transfer coefficient to a reference and the removal ratio of nitrogen oxides. It should be noted that the removal ratio of nitrogen oxides indicated by the vertical axis increases in accordance with a quadratic curve as the ratio of the volumetric mass transfer coefficient increases indicated by the horizontal axis, as is shown in FIG. 8.

In summary, the exhaust gas purification apparatus 10 has the exhaust gas dispersing pipe 3 that is capable of rotating to generate small bubbles 3d of the exhaust gas which have increased contact areas to contribute to increasing the volumetric mass transfer coefficient and is capable of cutting down $NO_X$ contained in the exhaust gas by 80%. Furthermore, compared with the current exhaust gas purification apparatus, the exhaust gas purification apparatus 10 is made more compact.

The exhaust gas purification apparatus of the present invention can be modified or altered within the scope of the present invention..

The rotation drive unit 4 may be controlled with not only an electrical velocity variable control unit, but also a mechanical velocity variable control unit.

For instance, the motor 4b has a continuously variable transmission unit with a belt, which is capable of changing continuously the rotation speed of the exhaust gas purification pipe 3. To be specific, the rotation speed of the exhaust gas purification pipe 3 may be changed to a desired rotation speed by turning the variable handle 4g to a scale mark for a desired rotation speed to have the widths of the pulleys 4d, 4d, changed and the belt 4f moved, which leads to the rotation speed of the exhaust gas purification pipe 3 being adjusted to the desired rotation speed. Alternatively this variable handle 4g may be turned automatically.

**Claims**

1. An exhaust gas purification apparatus (10; 11; 12; 13; 14) for purifying harmful substances contained in an exhaust gas exhausted from a diesel engine (DE), comprising,
an exhaust gas purification tower (1) configured to store absorption liquid (2) to absorb the harmful substances,
an exhaust gas dispersing pipe (3) which is installed rotatably in the absorption liquid (2) in the exhaust gas purification tower (1),
gas dispersing holes (3a) formed on the exhaust gas dispersing pipe (3),
a rotation drive unit (4) for rotating the exhaust gas dispersing pipe (3),
and
an exhaust gas inlet pipe (7) configured to introduce the exhaust gas into the exhaust gas dispersing pipe (3),
wherein in use, the exhaust gas introduced into the exhaust gas dispersing pipe (3) that is kept rotating is discharged through the gas dispersing holes (3a) into the absorption liquid (2) to create bubbles (3d) of the exhaust gas which are dispersed in the absorption liquid (2) and have the harmful substances absorbed in the absorption liquid.

2. The exhaust gas purification apparatus as claimed in claim 1, wherein a rotation speed of the exhaust gas dispersing pipe (3) is controlled and changed to have diameters of the bubbles (3d) kept within a range between 1 and 5000$\mu$m regardless of a change in an amount of the harmful substance in the exhaust gas in accordance with the rotation speed, a pressure of the exhaust gas, a kind of heavy fuel oil and a combustion temperature of the diesel engine (DE).

3. The exhaust gas purification apparatus as claimed in claim 1 or claim 2, further comprising a heat exchanger (5) to collect heat generated by a temperature rise of the absorption liquid (2).

4. The exhaust gas purification apparatus as claimed in any of claims 1 to 3, wherein the used absorption liquid (2) which has absorbed the harmful substances is discharged from the exhaust gas purification tower (1) while the fresh absorption liquid (2) which has not absorbed the harmful substances is supplied into the exhaust gas purification tower (1).

5. The exhaust gas purification apparatus as claimed in any of claims 1 to 4, wherein the absorption liquid (2) is sea water.

FIG. 1A

gas outlet ↑

1b

10

1

1c

7

gas inlet →

Hg

6

6c

6a

3d

5

2

9

9a

A

H1

3b

3e

3a

4

3b

3a

3c

4c

3c

3

3c

4e

4a

3c

4c

Control Unit

18

1a

3d

3a

6b

A

Discharged Liquid

FIG. 1B

9

9a

3c

3e

3

FIG. 1C

3b

4d

4f

4b

4d

4g

FIG. 2A

FIG. 2B

gas inlet

gas inlet

EP 2 514 512 A1

## FIG. 3

## FIG. 4

FIG. 5

FIG. 6

## FIG. 7

Specific Contact Area Ratio of Bubbles for Unit Volume of Liquid [-]

## FIG. 8

Ratio of Volumetric Mass Transfer Coefficient [-]

# FIG. 9

## FIG. 10

## FIG. 11

Europäisches
Patentamt

European
Patent Office

Office européen
des brevets

# EUROPEAN SEARCH REPORT

Application Number

EP 12 16 5046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 750 030 A2 (MITSUBISHI HEAVY IND LTD [JP]) 27 December 1996 (1996-12-27) * related passages of descriptionfigures 3,4 * * paragraph [0050] * ----- | 1-5 | INV. B01D53/92 B01D53/78 B01D53/48 B01D53/56 B01D53/60 B01D53/04 |
| X | US 6 389 878 B1 (ZAMFES KONSTANDINOS S [CA]) 21 May 2002 (2002-05-21) * figure 1b * ----- | 1-5 | |
| X | EP 0 338 967 A1 (MITSUBISHI HEAVY IND LTD [JP]) 25 October 1989 (1989-10-25) * claim 1; figure 1 * ----- | 1-5 | |
| X | DE 12 44 121 B (ESCHER WYSS GMBH) 13 July 1967 (1967-07-13) * claim 1; figure 1 * ----- | 1-5 | |

| | | | TECHNICAL FIELDS SEARCHED (IPC) |
|---|---|---|---|
| | | | B01D |

The present search report has been drawn up for all claims

| Place of search | Date of completion of the search | Examiner |
|---|---|---|
| Munich | 1 August 2012 | Fischer, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 12 16 5046

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2012

| Patent document cited in search report | | Publication date | Patent family member(s) | | Publication date |
|---|---|---|---|---|---|
| EP 0750030 | A2 | 27-12-1996 | DE | 69615285 D1 | 25-10-2001 |
| | | | DE | 69615285 T2 | 27-06-2002 |
| | | | EP | 0750030 A2 | 27-12-1996 |
| | | | US | 5824273 A | 20-10-1998 |
| | | | US | 2001009649 A1 | 26-07-2001 |
| US 6389878 | B1 | 21-05-2002 | CA | 2270833 A1 | 30-10-2000 |
| | | | US | 6389878 B1 | 21-05-2002 |
| EP 0338967 | A1 | 25-10-1989 | AU | 3242989 A | 12-10-1989 |
| | | | BR | 8901652 A | 21-11-1989 |
| | | | DE | 68916583 D1 | 11-08-1994 |
| | | | DE | 68916583 T2 | 27-10-1994 |
| | | | DK | 167789 A | 09-10-1989 |
| | | | EP | 0338967 A1 | 25-10-1989 |
| | | | ES | 2056245 T3 | 01-10-1994 |
| | | | JP | 1258733 A | 16-10-1989 |
| | | | JP | 2505525 B2 | 12-06-1996 |
| | | | US | 4955586 A | 11-09-1990 |
| DE 1244121 | B | 13-07-1967 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Engine room is changing, Technology Trend of Exhaust Gas Purification. **KOICHI HIRATA.** Lecture Summary Book of Ninth Seminar of National Maritime Research Institute. National Maritime Research Institute, 11 September 2009, 11